# EUROPEAN PATENT APPLICATION

(11) **EP 2 728 475 A1**
(43) Date of publication of application: **07.05.2014**
(21) Application number: 12191107.7
(22) Date of filing: 02.11.2012
(51) Int. Cl.: G06F 9/54

(54) **Event management**

(71) Applicant: Rockwell Automation Technologies, Inc., Mayfield Heights, OH 44124 (US)
(72) Inventor: Thomsen, Joachim, Singapore 278740 (SG)
(74) Representative: Grünecker, Kinkeldey, Stockmair & Schwanhäusser

(57) **Abstract**

Described herein are mechanisms for providing event objects that can be configured under a certain timing or sequence context in parallel to similar event objects that are configured under another timing or sequence context. These mechanisms can be employed, for example, within an industrial controller. The mechanisms include queuing a first event object on a queue according to a first timing or sequence context and queuing a second event object on the queue according to a second timing or sequence context in parallel to the queuing of the first event object. The mechanisms can further facilitate consumption of the first event object from the queue by a first code element and consumption of the second event object from the queue by a second code element. In other words, the first and second code elements are activated through the consumption of the first and second event object.

## Description

### TECHNICAL FIELD

This disclosure generally relates to the management of events within discrete applications to facilitate a horizontal flow of information.

### BACKGROUND

Industrial automation generally refers to the use of control systems to increase the productivity and/or quality of an industrial process. An "industrial process" generally refers to any type of process that facilitates the production of goods or the delivery of services. A "control system" generally refers to a device or set of devices that manage, command, direct, or regulate the behavior of other devices utilized within an industrial process. The "control system" can be managed by an "industrial controller," such as a programmable logic controller, a programmable automation controller, or the like.

Traditionally, an industrial process is modeled via a centralized process scheme. A discrete industrial process, however, does not always line up with a centralized flow of control and information. The discrete process often relies on a horizontal information (data, control, or the like) flow for normal operation.

The path of horizontal information flow is different from a centralized path employed by models used to automate traditional industrial processes. Discrete applications that can automate discrete processes often are developed modularly. Such modular discrete applications exhibit centralized horizontal flow between a plurality of equipment modules and the control module (such that horizontal equipment modules need to communicate with each other through a central control and information flow).

The horizontal relationships are difficult to map into standard industiral controller schemes without breaking data consistency of the modules, creating complex interfaces or centrally coordinating flow (in other words, creating one specific flow for every module configuration). It is difficult to find a single application that meets all development requirements of a discrete applications. Many half-solutions exist that address only one of data consistency, central sequencing, or execution via handshakes. These half-solutions are typically implemented in application code. It has been difficult, however, to find one model that addresses all requirements of a horizontal data flow.

The above-described background is merely intended to provide an overview of contextual information regarding development of discrete applications, and is not intended to be exhaustive. Additional context may become apparent upon review of one or more of the various non-limiting embodiments of the following detailed description.

### SUMMARY

The following presents a simplified summary to provide a basic understanding of some aspects of the subject disclosure. This summary is not an extensive overview of the disclosed subject matter. It is not intended to identify key or critical elements of the disclosed subject matter, nor is it intended to delineate the scope of the subject disclosure or the claims. Its sole purpose is to present some concepts of the disclosed subject matter in a simplified form as a prelude to the more detailed description presented later.

In a non-limiting embodiment of the subject disclosure, an industrial controller is described. The industrial controller includes a memory that stores computer-executable instructions and a processor that facilitates execution of the computer-executable instructions to provide a first configurable event object comprising a first timing or sequence context and a second configurable event object comprising a second timing or sequence context in parallel to a queue; and facilitate consumption of the first configurable event object by a first code element when the first code element is available and a consumption of the second configurable event object by a second code element when the second code element is available.

In another non-limiting embodiment, a method is described that can facilitate event management within an industrial controller, including a processor. The method includes queuing, by the industrial controller including the processor, a first event object on a queue according to a first timing or sequence context; queuing, by the industrial controller, a second event object on the queue according to a second timing or sequence context in parallel to the queuing of the first event object; facilitating, by the industrial controller, consumption of the first event object from the queue by a first code element; and facilitating, by the industrial controller, consumption of the second event object from the queue by a second code element.

In a further non-limiting embodiment, a computer-readable storage medium is described. The computer-readable storage medium has computer-executable instructions stored thereon that, in response to execution by a computing device including a processor, cause a computing device to perform operations. The operations include providing a first event object comprising a first attribute to a queue; providing a second event object comprising a second attribute to the queue in parallel with the first event; activating a first code element through consumption of the first event object from the queue; and activating a second code element through consumption of the second event object from the queue.

The following description and the annexed drawings set forth in detail certain illustrative aspects of the disclosed subject matter. These aspects are indicative, however, of a few of the various ways in which the principles of the innovation may be employed. The disclosed subject matter is intended to include all such aspects and their equivalents. Other advantages and distinctive features of the disclosed subject matter will become apparent from the following detailed description of the innovation when considered in conjunction with the drawings.

### BRIEF DESCRIPTION OF THE DRAWINGS

Non-limiting and non-exhaustive embodiments of the subject disclosure are described with reference to the following figures, wherein like reference numerals refer to like parts throughout the various views unless otherwise specified.

FIG. 1 is a schematic illustration of a system employing an example queue, according to an embodiment of the subject disclosure;

FIG. 2 is a schematic illustration of an example event, according to an embodiment of the subject disclosure;

FIG. 3 is a schematic illustration of the functionalities of an example configuration tool, according to an embodiment of the subject disclosure;

FIG. 4 is a schematic illustration of the functionalities of an example code element, according to an embodiment of the subject disclosure;

FIG. 5 is a schematic illustration of a system that facilitates event production and consumption, according to an embodiment of the subject disclosure;

FIG. 6 is a schematic illustration of a system that facilitates production and consumption of multiple events, according to an embodiment of the subject disclosure;

FIG. 7 is a schematic illustration of a system that employs multiple queues to facilitate the production and consumption of multiple events, according to an embodiment of the subject disclosure;

FIG. 8 is a schematic illustration of a system that facilitates event handling, according to an embodiment of the subject disclosure;

FIG. 9 is a schematic illustration of an example visualization of events, according to an embodiment of the subject disclosure;

FIG. 10 is a schematic illustration of an example visualization of events over several cycles, according to an embodiment of the subject disclosure;

FIG. 11 is a process flow diagram illustrating a method for facilitating event management in an industrial automation system, according to an embodiment of the subject disclosure;

FIG. 12 is a process flow diagram illustrating a method for facilitating configuration of a code object, according to an embodiment of the subject disclosure;

FIG. 13 is a process flow diagram illustrating a method for facilitating configuration of an event attribute, according to an embodiment of the subject disclosure;

FIG. 14 is a process flow diagram illustrating a method for providing a visualization of a trending diagram for a plurality of events, according to an embodiment of the subject disclosure;

FIG. 15 illustrates an example computing environment in which the various embodiments described herein can be implemented; and

FIG. 16 illustrates an example of a computer network in which various embodiments described herein can be implemented.

### DETAILED DESCRIPTION

In the following description, numerous specific details are set forth to provide a thorough understanding of the embodiments of the subject disclosure. One skilled in the relevant art will recognize, however, that the embodiments described herein can be practiced without one or more of the specific details, or with other methods, components, materials, etc. In other instances, well-known structures, materials, or operations are not shown or described in detail to avoid obscuring certain aspects.

According to an aspect of the subject disclosure, described herein are systems, apparatuses and methods can facilitate horizontal information (data, control, or the like) flow in a discrete application through an event handling technique. Horizontal data flow can be facilitated through an event handling technique. The event handling technique can be employed as a native implementation is an industrial controller. For example, the event handling technique can be implemented within an event-based operating system for an industrial controller or within the application code level of an industrial controller.

The event handling technique utilizes an event queue as both data and execution backbone. Routines (or event routines) can be configured that are tied to events, and data can be managed through user defined data types associated with the events. The routine can be implemented side by side with standard routines with a common data scope. Execution of the routine can be coupled to event production to the queue and/or event consumption from the queue. In a similar fashion the same concept can be employed with the use of "Programs" instead or in addition to "Routines"

Event handling using events and queues within an industrial controller facilitates development of a streamlined interface to assist a developer in solving horizontal flows to facilitate automation of discrete processes through discrete applications. This approach fundamentally simplifies the complexity of discrete applications, increases code quality, and optimizes performance.

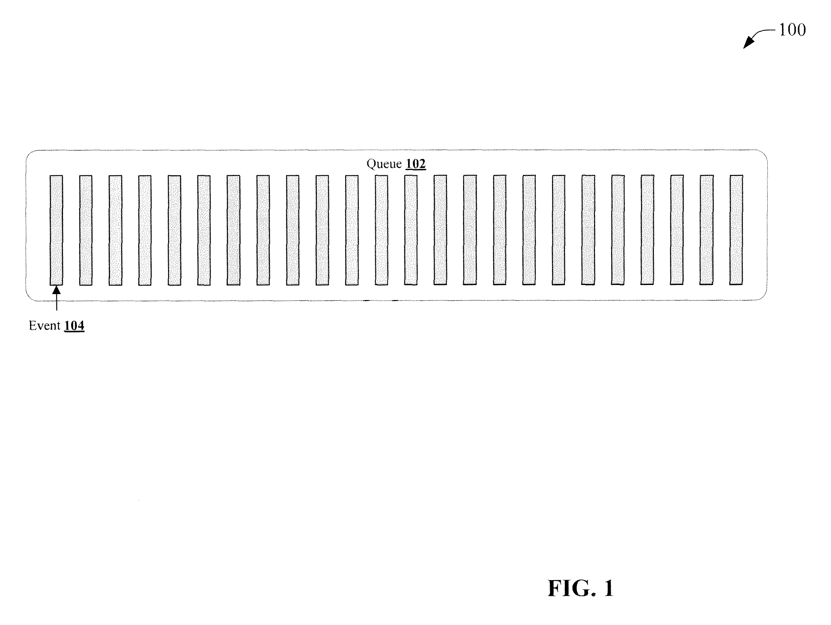

Referring now to FIG. 1, illustrated is a system 100 employing an example queue 102, according to an embodiment of the subject disclosure. System 100 can facilitate horizontal data flow through a queue 102 that can facilitate handling of events, such as event 104. System 100 can be implemented natively within an industrial controller so a user automating a discrete process need not manage complex implementations.

Queue 102 is basically an array of events. The queue 102 can be a common address space that stores a number of data records (events, like event 104). The queue 102 can be variable or limited in the amount of objects it can contain. Although queue 102 is illustrated as holding 24 events, a person having ordinary skill will understand that the queue can hold any number of events, limited only by the discrete application requirements and the memory and processor capabilities of an industrial controller that employs system 100.

The term industrial controller generally includes any device that can be utilized in an industrial automation system to facilitate automation. Examples of industrial controllers include programmable logic controllers (PLCs), programmable automation controllers (PAC), and the like. The industrial controller includes a memory that stores system 100 and a processor that facilitates execution of system 100.

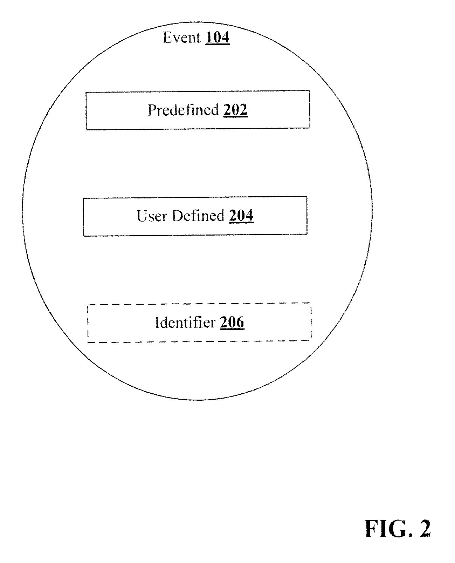

Event 104 (also known as an invocation object) is an object that is produced by an application (e.g., software that is implemented in a certain stage of the discrete process) and passed through the queue. A schematic illustration of an example event 104, according to an embodiment of the subject disclosure, is shown in FIG. 2.

The event 104 can be of variable data size that can facilitate communication between components of a discrete process. The event 104 can include predefined data 202 that can be standard through different types of events. The event 104 can also include user defined data 204 that is configurable for a given application. The user defined data 204 can include one or more attributes that are specific to different discrete processes and/or different events within a certain discrete process. This can allow a generalized event framework to be used for many different applications for different discrete industrial processes with reconfiguration of one or more attributes.

The attributes can include any information useful for the discrete process and can be defined for a unique event type. The attributes can include positions, times, counts, temperatures, or the like. For example, an attribute can be a subscriber count before an event is produced or consumed. For example, ten subscribers may be required. In this example, the attributes can also include a timeout function that ends the event if the required number of subscribers is not met.

Additionally, the event 104 can be a summation event. The summation event requires multiple events or alternative events to build a conclusive invocation at the subscriber.

Optionally, the event 104 can include a classifier, such as an operational identifier 106. An example of an operational identifier is a name. The operational identifier 106 can be any type of attribute that provides any type of identification to the event 104.

Multiple instances of an event can be provided with different identifiers or attributes. The indicators and/or attributes can be utilized to distinguish unique instances of events that are produced (e.g., by a code element). The multiple instances can be produced to the queue and consumed from the queue. The queue can hold multiple instances of events with the same identifier and/or attribute at the same time.

The identifier, for example, can be a "name," such as "Alarm", "Product Detected", "Machine switched on," or the like. Timing characteristics or other characteristics of the sequence that make each instance of the event unique that can be mapped into the attributes. An event with a "name" can have a text attribute defined and a unique instance can have a certain attributed value. For example, an event with a name "Alarm" can have an attribute "Time," which can be filled in with different corresponding time of alarm values for different instances of the event.

Events can be produced to the queue and/or consumed from the queue by various code elements. A code element, generally, can produce any type of event and can consume any type of event. The code element is typically configured with specific functionality by a configuration tool. The configuration can be performed in response to a Dialogue and/or in response to an input that is a response to a Dialogue.

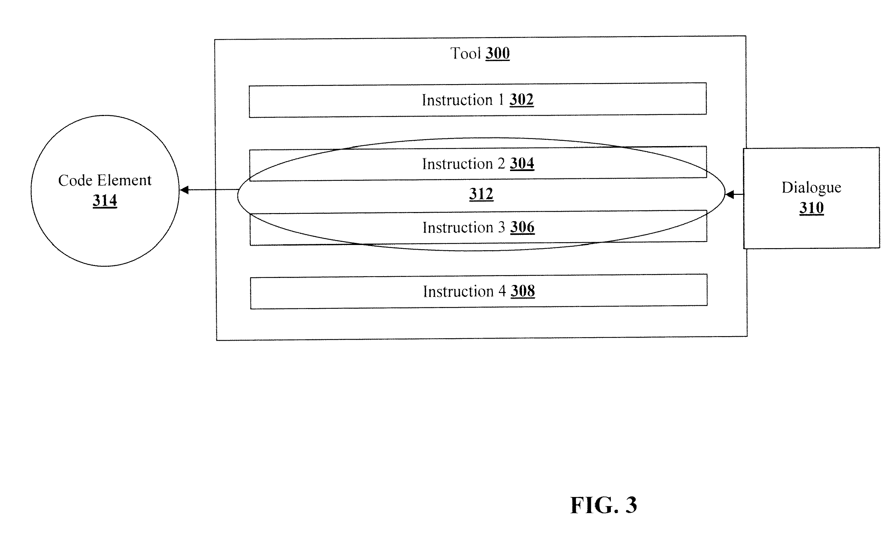

Referring now to FIG. 3, illustrated is a schematic illustration of the functionalities of an example configuration tool 300 that can be utilized to configure a code element 314, according to an embodiment of the subject disclosure. The configuration tool 300 provides an environment in which a user and/or an entity can configure behaviors by using instructions specific to an industrial controller and/or the specific discrete application. The tool 300 receives instructions 302, 304, 306 or 308 as inputs in response to a dialogue 310. The tool 300 can also have a cache of previously defined instructions 302, 304, 306, or 308.

The tool 300 can group 312 instructions (instruction 2 304 and instruction 3 306 in this example) into logical sets. The logical sets can be grouped, for example, in the form of statements, routines, programs, and/or user defined instructions. The logical sets can be grouped based on responses to dialogue 310. The code element 314 can be configured to activate by the arrival of an event, to consume an event, to produce an event, or to perform any other function with regard to the event.

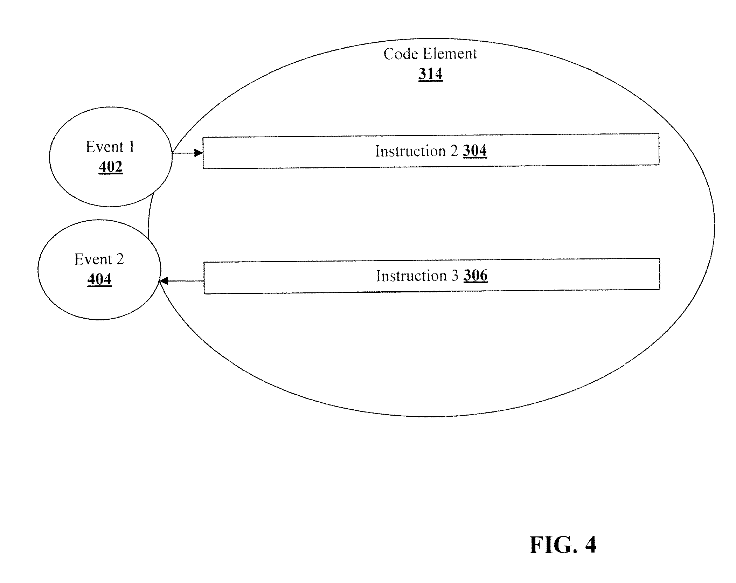

An example code element 314 is illustrated in FIG. 4. For simplicity, code element 314 is illustrated as including only two instructions (instruction 2 304 and instruction 3 306), but it will be understood that the code element 314 can include any number of instructions.

The code element 314 can both produce and consume events. Instruction 2 facilitate the consumption of Event 1 402 from the queue. Event 402 can include an attribute that triggers the consumption by code element 314. Code element 314 can subscribe to elements with attributes similar to event 402. This subscription can be tied to a routine within the code element 314.

In response to consumption of Event 1 402, Instruction 3 304 facilitates the production of Event 2 404 to the queue. Event 2 can have attributes specific to Event 2 404 that can trigger another code element to consume Event 2 404. The corresponding instructions and/or code elements can be configured via a dialogue. The dialogue facilitates the configuration of the code element 314 to activate upon arrival of Event 1 402 and a second code element to activate upon arrival of Event 2 404

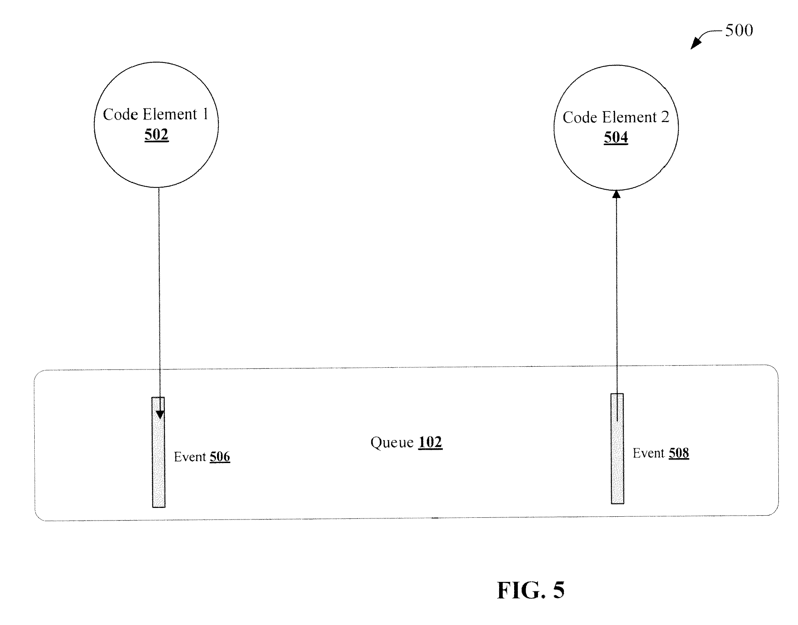

Referring now to FIG. 5, illustrated is a schematic illustration of a system 500 that facilitates event 506 production to the queue 102 by code element 1 502 and event 508 consumption from the queue 102, by code element 2 504 according to an embodiment of the subject disclosure. As illustrated in FIG. 5, code element 1 502 is a producer, while code element 2 504 is a consumer.

In the queue 102 multiple events, with the same or different identifiers can exist. The consuming code element 2 504 is capable of processing a limited number of events (from zero to many) at any given time. The queue 102 is synchronized to provide as many event instances as the consumer code element 504 is configured to process. The queue 102 helps to provide asynchronous execution of producing code elements (e.g., code element 1 502) and consumer code elements (e.g., code element 2 504). The asynchronous execution assists in modularization of the industrial process - more specifically, horizontal modularization of a discrete industrial process. The queue 102 or elements within the queue 102 can also provide an execution context for the events as a how to for the consumer code elements.

Code element 1 and code element 2 can be tied to different portions of a discrete industrial process that are each facilitated by the same industrial controller. Elements within the queue (and multiple instances thereof, possibly containing one or more different attributes) can be produced and consumed in parallel. For example, the multiple instances can be configured under different timing or sequence contexts. The instances can have the same attributes or different attributes. The instances can also activate the same or different code elements in response to their consumption.

Utilizing event handling through the queue 102 of system 500 within an industrial controller, features of the industrial controller, such as scan time or reaction time, can be improved or optimized since only the code associated with the instance of the event needs to run at any given time (production and/or consumption) instead of an entire system-level code. This allows a user to build a more flexible, better quality, more deterministic, and simpler code that also resides in a flatter structure. It is also possible to take this mechanism and provide application distribution modules (for example, according to the International Electrotechnical Commission (IEC) 61131 configuration standard for programmable controllers).

System 500 can be implemented within an industrial controller that includes a memory that stores computer-executable instructions and a processor that facilitates execution of the computer executable instructions to perform operations. The operations include at least providing a first configurable event object (event 508) to a queue 102. The event 506 can include a first timing or sequence context. The operations also include providing a second configurable event object (event 506) comprising a second timing or sequence context in parallel to a queue 102. The two event objects can also include other user-configured attributes. The attributes can be the same for the two events or different for each of the two events.

The operations also include facilitating consumption of the first configurable event object (event 508) by a first code element when the first code element is available and a consumption of the second configurable event object (506) by a second code element when the second code element is available. In an embodiment, the second code element and the first code element can be the same code element.

In another embodiment, the operations can be extended to include more code elements producing and/or consuming additional events. For example, the operations can also include producing a third configurable event object with a third timing or sequence context by the first code element. The operations can also include producing a fourth configurable event object with a fourth timing or sequence by the second code element. The third configurable event object and/or the fourth configurable event object can have additional attributes that are the same or different. The third configurable event object can be generated in response to consumption of the first event object and the fourth configurable event object can be generated in response to the consumption of the second event object.

The queue 102 and various events can provide a streamlined interface to assist developers in solving horizontal flows for discrete industrial processes. The approach fundamentally simplifies the complexity of applications, reduces development time, increases code quality and optimizes performance. The queue can function as both a data backbone and an execution backbone. The system 500 can facilitate easy configuration of routines and/or code elements that are tied to events, and can facilitate data management through user defined data types or attributes associated with the event.

The queue 102 can be configured to be aware of the status of a consumer code element 2 504. The queue 102 can withhold a subsequent event (e.g., event 508) from code element 2 504 to be consumed until such a time as the consuming code element 2 504 is available and has dealt with the previously consumed event. Accordingly, queue 102 effectively allows the system 500 to coordinate control between code elements that have a significant distance between each other. The tern "distance" can be in time, space, or any other sequence parameter (depending on user configured attributes).

Code elements in industrial controllers are traditionally resource bound. When a code element is resource bound, the code element can coordinate activation of only a defined set of physical elements. The code element can, therefore, only carry out a finite set of operations of this set of resources at a time, and it is restricted by the properties of the resources. The queue 102 allows for multiple activation requests to exist (e.g., events 506 or 508 for example can have the same type, name, or the like) in the queue 102 at once, and the queue 102 allows for consuming code objects to understand the requirements for each unique instance (e.g., through contexts and the values in the user configurable attributes) with a potentially unique behavior.

System 500 creates technology that is instantly usable upon an industrial controller machine upon development. System 500 also provides a flexible framework that can be adapted to different industrial controller machine configurations. System 500 can utilize one or more of programs, tasks, producer-consumer networks, and multi-processing.

System 500 can facilitate the use of hi level mechanisms (such as the mechanisms of the IEC 61499 standard for distributed control system design) within IEC 61131 framework, essentially providing discrete applications with a backbone to optimize both modularization configurations (such as data scope, program containers, in/out variables, and the like) and flexible invocation configurations (such as event handling, event routines, event data scoping, and the like).

System 500 can also be used to map mechanical flows of industrial controller machines into event flows and/or to generate timing and auditing information that can be auto-generated as a provision of the system 500. System 500 also facilitates the elimination of race conditions due to the queue 102, which facilitates queuing of different unique events at the source (or producer code element).

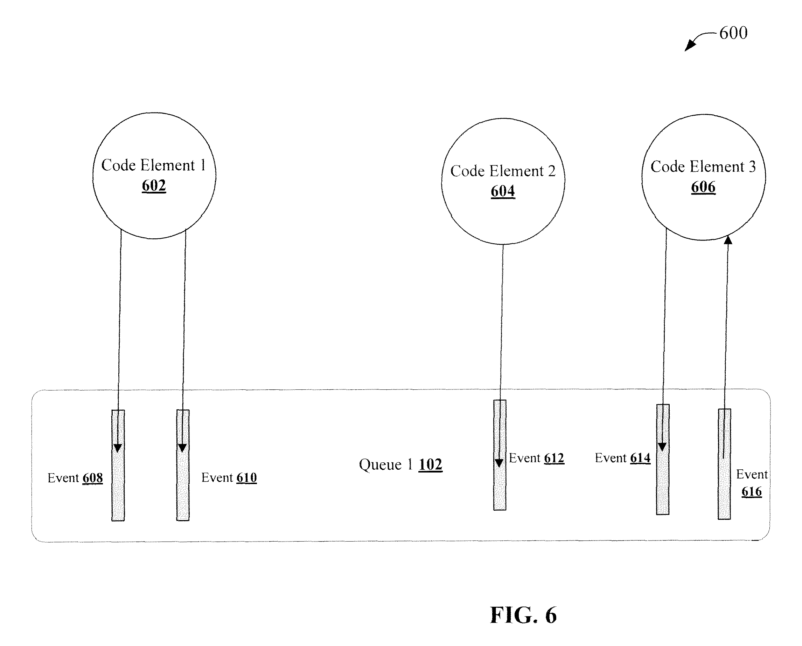

Referring now to FIG. 6, illustrated is a schematic illustration of a system 600 that facilitates production and consumption of multiple events 608, 610, 612, 614, 616, according to an embodiment of the subject disclosure. System 600 is illustrated to show three code elements 602, 604, 606; however, this is merely for simplicity of illustration and explanation. System 600 can include any number of code elements greater than or equal to one, limiting only by memory and processor requirements of the industrial controller.

The code elements can produce elements to the queue 102 and/or consume elements from the queue 102. As illustrated in FIG. 6, code element 1 602 produces event 608 and event 610 to the queue 102. Code element 2 604 produces event 612 to the queue 102. Code element 3 606 produces event 614 to queue 102 and consumes event 616 from the queue 102. The code elements 602, 604, 606 can produce elements 608, 610, 612, 614 with the same or different identifiers to the queue 102. The code elements 602, 604, 606 can produce events with other identifiers that are the same or different. The code element 606 can produce and consume multiple events with the same or different identifiers.

The queue 102 can be aware of the status of the consuming code element 3 606 so that new events are presented for consumption when code element 3 606 is available. The queue 102 can hold multiple instances of an event until the consuming code element 3 is available to receive the event.

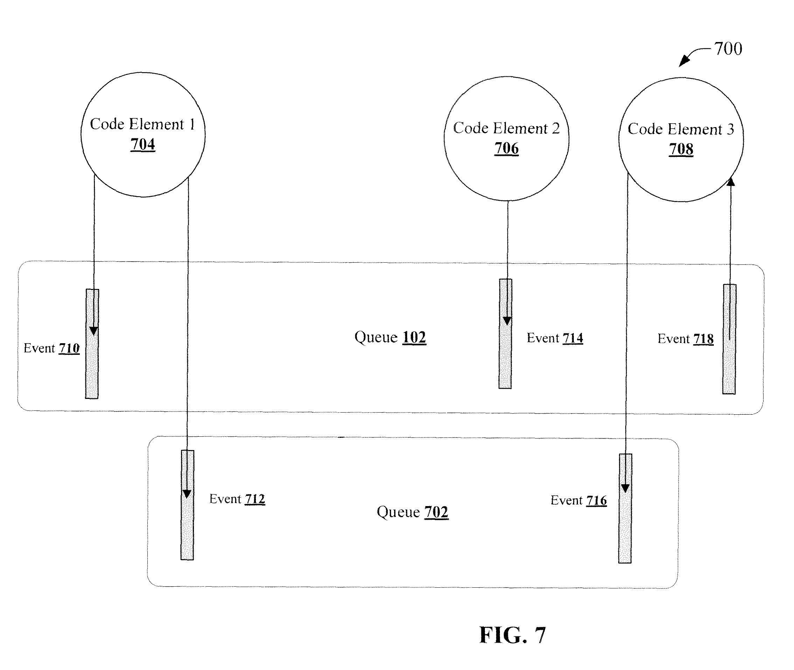

Referring now to FIG. 7, illustrated is a schematic illustration of a system 700 that employs multiple queues 102, 702 to facilitate the production and consumption of multiple events, according to an embodiment of the subject disclosure System, 700 can employ any number of queues, even though just two queues 102, 702 are shown.

As illustrated, code element 1 704 can produce event 710 to queue 102 and event 712 to queue 702. Code element 2 706 can produce event 714 to queue 102. Code element 3 708 can produce event 718 to queue 702 and consume event 718 from queue 1. These indications, however, are merely for simplicity of illustration. It will be understood that generally, the same rules that apply with one queue are applied with multiple queues (any to any relationship therein). For example, events can be produced to and consumed from both queues 102 and 702. Queues 102 and 702 can each be aware of the status of consuming code element 3 708 and present events to the consuming code element 3 708 when the consuming code element 3 708 becomes available.

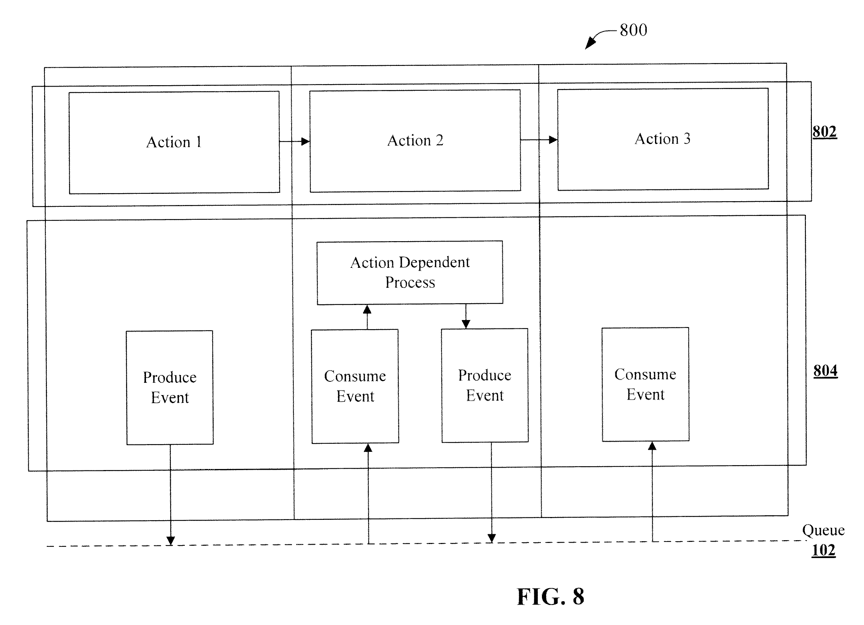

Referring now to FIG. 8, illustrated is a schematic illustration of a system 800 that facilitates event handling, according to an embodiment of the subject disclosure. System 800 illustrates basic program to program sequencing.

As illustrated, system 800 includes three process steps represented as function blocks. The three function blocks facilitate Action 1, Action 2 and Action 3 of process flow 802, respectively. Production and consumption of events, together with action dependent processes are part of the execution process flow 804.

Action 1 facilitates the production of an event to the queue 102. The event is consumed to facilitate Action 2. Upon consumption of the event, an action dependent process occurs and, during or after the action dependent process, another event is produced. This event is consumed to facilitate Action 3. It will be understood that queue 102 can be aware of the various statuses of the function blocks such that the events can only be consumed when the status of the consuming function block so indicates.

In an industrial process, multiple code elements become connected through events. Events actually manage the flow of activities. This allows a visualization to be developed that can plot and event's occurrence against any attribute captured in queue 102.

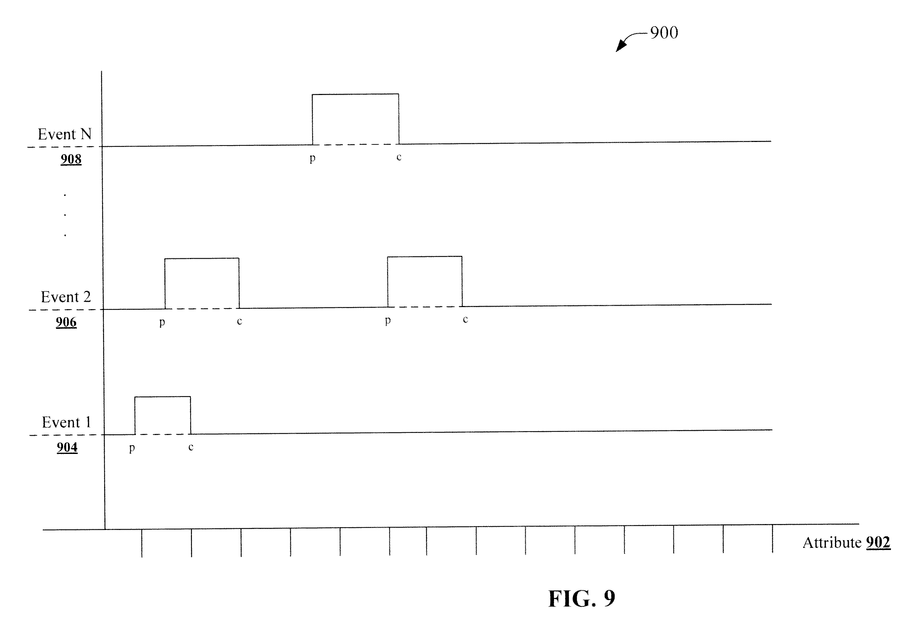

Referring now to FIG. 9, illustrated is a schematic illustration of an example visualization 900 of events 904, 906, 908 plotted against any attribute 902 that can be captured in the queue (e.g., time, position, or the like), according to an embodiment of the subject disclosure. Most automation processes are repetitive, operating in cycles. Queuing of events 904, 906, 908 allows a user to review the sequence of actions as a diagram (e.g., visualization 900). This diagram (e.g., visualization 900) is in the same format the machine or system builders use for the development of the process, allowing software implemented in a process to be compared and/or validated against a process design.

The visualization 900 can be a trending diagram that can show a relationship or sequence between different events 904, 906, 908. The events 904, 906, 908 can be plotted against a user defined attribute 902. For example, a dialogue can be presented, allowing a user to select events 904, 906, 908 to be plotted against a user defined attribute 902 as the x-axis.

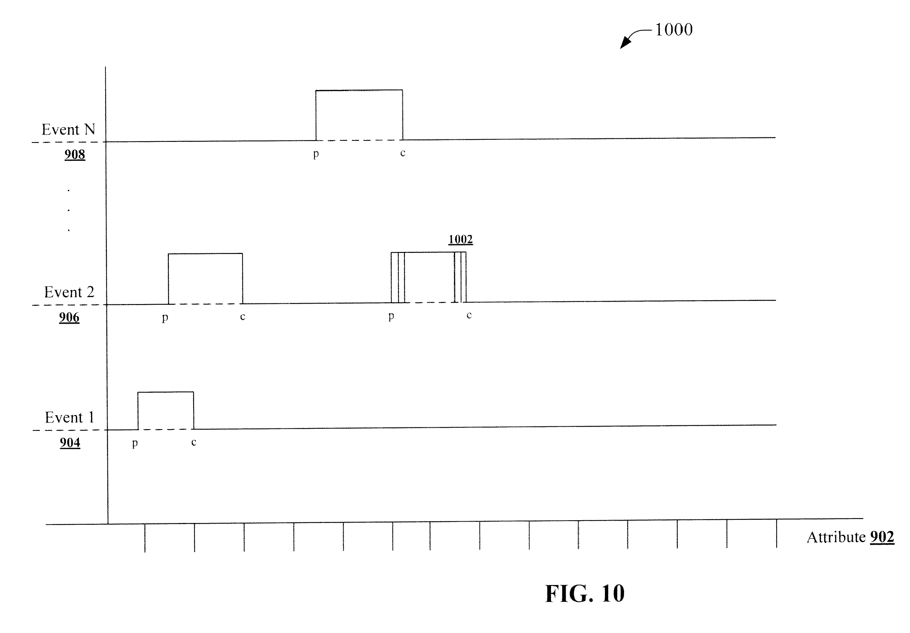

FIG. 10 is a schematic illustration of an example visualization 1000 of events over several cycles, according to an embodiment of the subject disclosure. The trending diagram visualization of FIG. 9 can be repeated over several cycles of attribute 902. This allows a user to review the accuracy, variance, or the like of the sequence of events over multiple cycles. As illustrated in FIG. 10, event 906 exhibits a variance at 1002.

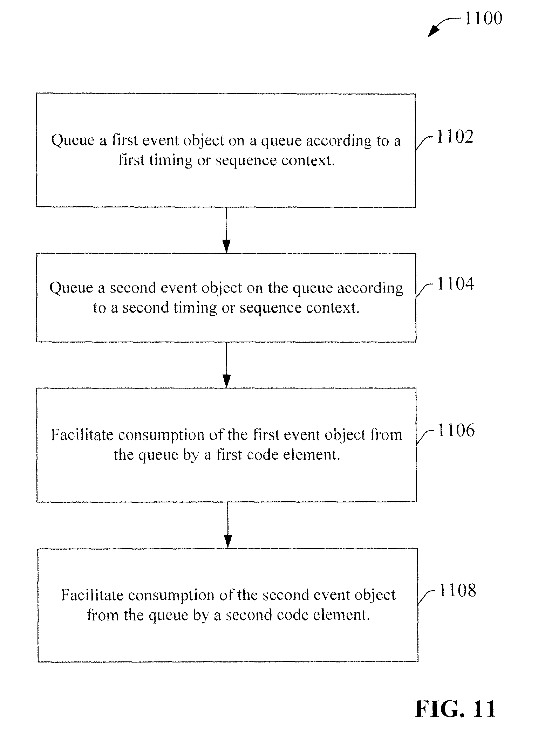

FIGs. 11-14 show methods illustrated as flow diagrams, in accordance with one or more embodiments of the subject application. For simplicity of explanation, the methods are depicted and described as series of acts. However, the methods are not limited by the acts illustrated and by the order of the acts. For example, acts can occur in various orders and/or concurrently, and with other acts not presented and described herein. Furthermore, not all illustrated acts may be required to implement the methods. The acts of the methods can be performed by a system including a processor.

Additionally, it should be further appreciated that the methods can be implemented on one or more articles of manufacture (*e.g*., a non-transitory computer-readable storage medium having computer-executable instructions for performing the acts and/or events of the various methods stored thereon) to facilitate transporting and transferring the methods. Non-transitory computer readable media can include, but are not limited to, magnetic storage devices (*e.g*., hard disk, floppy disk, magnetic strips...), optical disks [*e.g*., compact disk (CD), digital versatile disk (DVD)...], smart cards, and flash memory devices (*e.g*., card, stick, key drive...), and the like. Further yet, two or more of methods can be implemented in combination with each other, to accomplish one or more features or advantages described herein.

Referring now to FIG. 11, illustrated is a process flow diagram of a method 1100 that facilitates event management in an industrial automation system, according to a non-limiting embodiment. An industrial automation system can refer to an industrial controller, such as a programmable logic controller, programmable automation controller, or any other hardware machine.

At element 1102, a first event object can be provided (e.g., produced, queued or the like) to a queue according to a first timing or sequence context. At element 1004, a second event object can be provided (e.g., produced, queued or the like) to a queue according to a second timing or sequence context. The queuing of the second event object can be done in parallel to the queuing of the second event object. It will be appreciated that the first event object and the second event object can be different instances of the same event with one or more different attributes indicating the different instances.

At 1106, consumption of the first event object from the queue by a first code object is facilitated. The consumption of the first event can activate the first code object. At 1108, consumption of the second event object from the queue by a second code object is facilitated. The consumption of the second event can activate the second code object. It will be appreciated that the first code object and the second code object can be the same code object, different instances of the same code object, or entirely different code objects.

In the queue multiple event objects, with the same or different identifiers (e.g., time stamp, sequence number, or the like) can exist. The consuming code element(s) or object(s) 2 are capable of processing a limited number of events (from zero to many) at any given time. The queue is synchronized to provide as many events as the consumer code object(s) or element(s) is configured to process. The queue helps to provide asynchronous execution of producing code elements and consumer code elements. The asynchronous execution assists in modularization of the industrial process - more specifically, horizontal modularization of a discrete industrial process. The queue or elements within the queue can also provide an execution context for the events as a how to for the consumer code elements.

The queue can be configured to be aware of the status of a consumer code element. The queue can withhold a subsequent event object from the consumer code element until such a time as the consuming code element is available and has dealt with the previously consumed event. Accordingly, the queue effectively facilitates coordination of control between code elements that have a significant distance between each other. The tern "distance" can be in time, space, or any other sequence parameter (depending on user configured attributes).

In an embodiment, method 1100 can be extended to include the production and consumption of more events. For example, the method 1100 can also include producing a third event object with a third timing or sequence context by the first code element and producing a fourth configurable event object with a fourth timing or sequence by the second code element. The third configurable event object and/or the fourth configurable event object can have additional attributes that are the same or different. For example, the third event object can be generated in response to consumption of the first event object and the fourth event object can be generated in response to the consumption of the second event object.

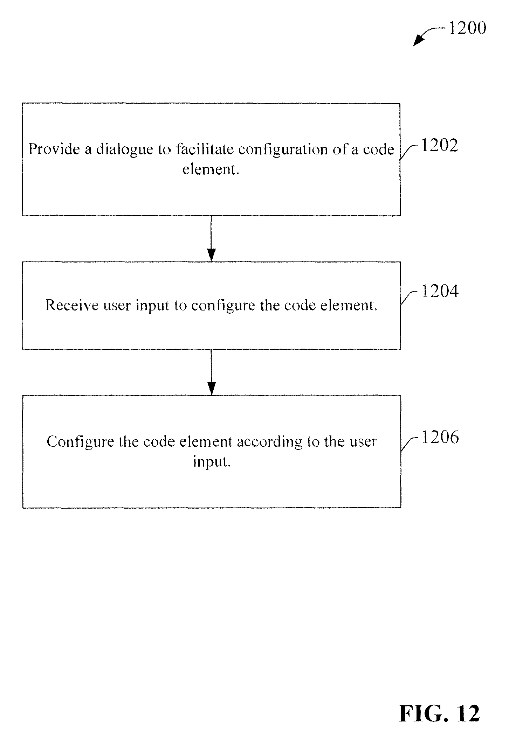

Referring now to FIG. 12, illustrated is a process flow diagram of a method 1200 that facilitates configuration of a code element, according to a non-limiting embodiment. An industrial automation system can refer to an industrial controller, such as a programmable logic controller, programmable automation controller, or any other hardware machine.

At element 1202, a dialogue can be provided to facilitate configuration of a code element (e.g., a consumer code element, a producer code element, or a code element capable of event production and consumption). The conditions for activation of the code element can also be configured. At 1204, an input can be received in response to the dialogue that can be utilized to configure the code element. At 1206, the code element can be configured according to the user input.

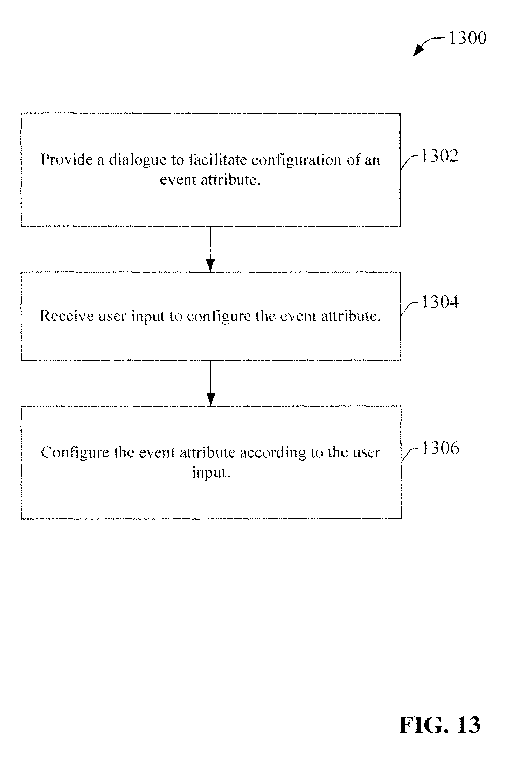

Referring now to FIG. 13, illustrated is a process flow diagram of a method 1300 that facilitates configuration of an event attribute, according to a non-limiting embodiment. An industrial automation system can refer to an industrial controller, such as a programmable logic controller, programmable automation controller, or any other hardware machine.

At 1302, a dialogue can be provided to facilitate configuration of an event attribute. The event attribute can be the same for a plurality of instances of an event, or the event attribute can be different for different instances of the event. At 1304, user input can be received to configure the event attribute. At 1306, the event attribute can be configured according to the user input.

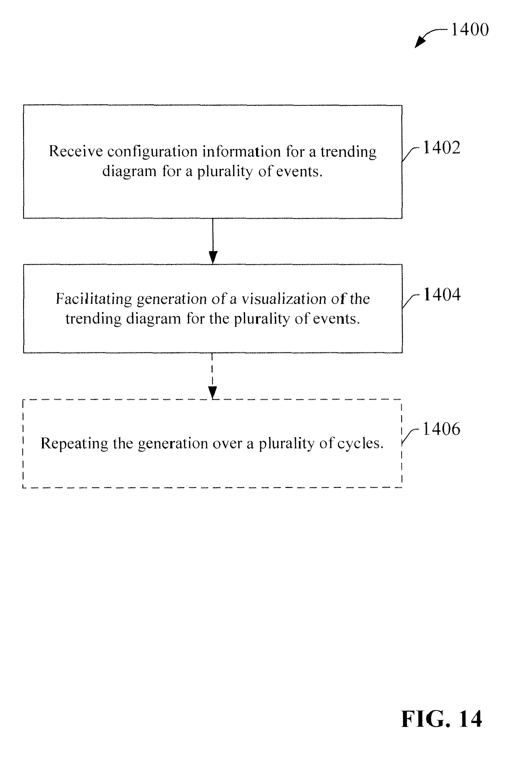

Referring now to FIG. 14, illustrated is a process flow diagram of a method 1400 that provides a visualization of a trending diagram for a plurality of events, according to a non-limiting embodiment. An industrial automation system can refer to an industrial controller, such as a programmable logic controller, programmable automation controller, or any other hardware machine.

At element 1402, configuration information can be received for a trending diagram for a plurality of events. The configuration information can include an attribute that can be utilized as the independent variable (or x-axis variable). The attribute can be any attribute common to the events (e.g., time, distance, or the like). The configuration information can, additionally or alternatively, include a selection of one or more events that can be plotted against the attribute.

At element 1404, generation of a visualization of the trending diagram for the plurality of events can be produced. The visualization can show a relationship between the plurality of events for the attribute. At element 1406, optionally, the generation can be repeated over a plurality cycles, showing differences in the trending diagram for an event over a cycle of the attribute.

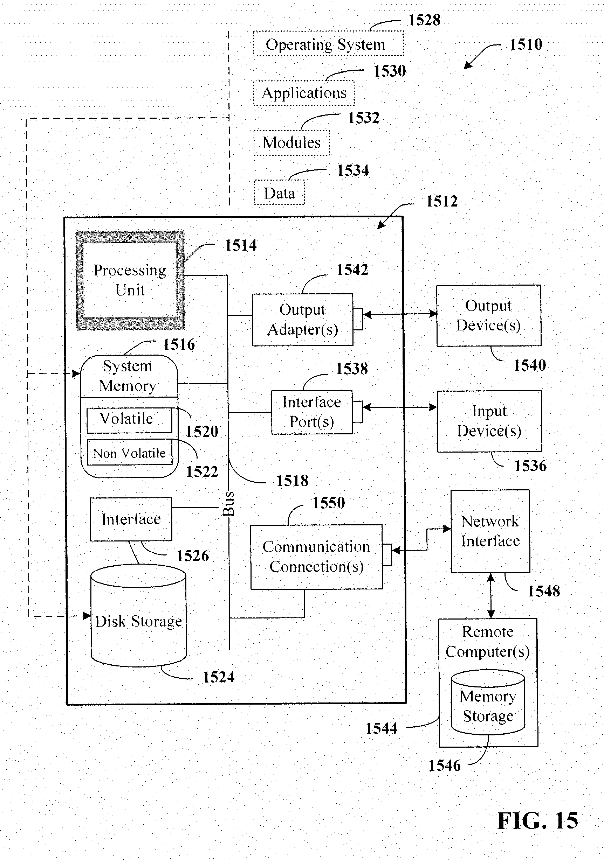

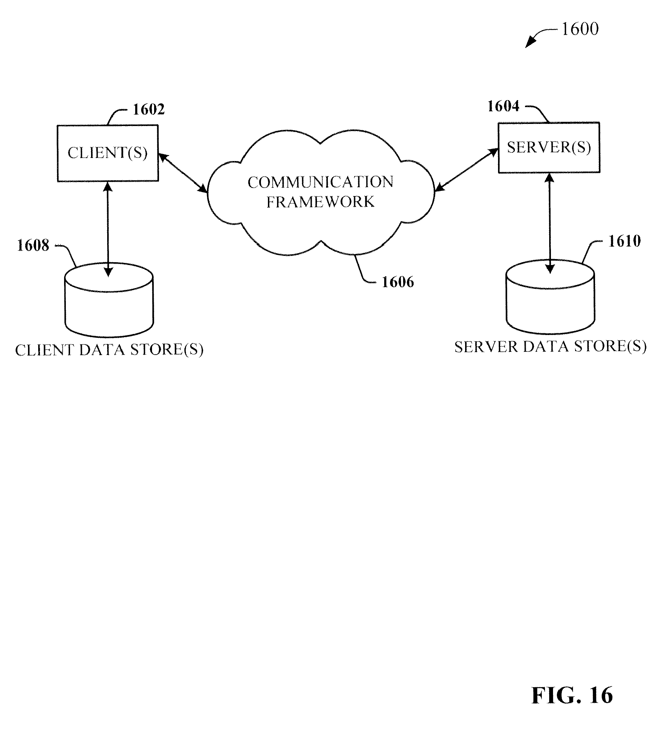

In order to provide a context for the various aspects of the disclosed subject matter, FIGs. 15 and 16, as well as the following discussion, are intended to provide a brief, general description of a suitable environment in which the various aspects of the disclosed subject matter can be implemented. The environment can be implemented within an industrial automation system to facilitate industrial automation applications

Industrial automation systems, such as industrial control systems and industrial automation environments, in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on. As described herein, the applications and processes are generally discrete applications that execute on a single machine within an industrial automation system. However, the discrete applications can be distributed through the industrial automation system.

Similarly, the term PLC or automation controller (PAC) as used herein can include functionality that can be shared across multiple components, systems, and/or networks. As an example, one or more PLCs or PACs can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as I/O modules including analog, digital, programmed/intelligent I/O modules, other programmable controllers, communications modules, sensors, actuators, output devices, and the like.

The network can include public networks such as the internet, intranets, and automation networks such as Common Industrial Protocol (CIP) networks including DeviceNet, ControlNet, and EtherNet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

With reference to FIG. 15, an example computing environment 1510 that can be utilized in an industrial automation system to facilitate implementing various aspects of the aforementioned subject matter. The environment 1510 includes a computer 1512, The computer 1512 includes a processing unit 1514, a system memory 1516, and a system bus 1518. The system bus 1518 couples system components including, but not limited to, the system memory 1516 to the processing unit 1514. The processing unit 1514 can be any of various available processors. Multi-core microprocessors and other multiprocessor architectures also can be employed as the processing unit 1514.

The system bus 1518 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1516 includes volatile memory 1520 and nonvolatile memory 1522. The basic input/output system (BIOS), containing the basic routines to transfer information between elements within the computer 1512, such as during start-up, is stored in nonvolatile memory 1522. By way of illustration, and not limitation, nonvolatile memory 1522 can include read only memory (ROM), programmable ROM (PROM), electrically programmable ROM (PROM), electrically erasable PROM (EEPROM), or flash memory. Volatile memory 1520 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1512 also includes removable/non-removable, volatile/non-volatile computer storage media. FIG. 15 illustrates, for example a disk storage 1524. Disk storage 1524 generally includes any computer recording media that includes a recording media to retain digital data. Disk storage 1524 includes, but is not limited to, devices like a magnetic disk drive, floppy disk drive, tape drive, magnetic drive, Jaz drive, Zip drive, LS-100 drive, solid state semiconductor drive, flash memory card, or memory stick. In addition, disk storage 1524 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1524 to the system bus 1518, a removable or non-removable interface is typically used such as interface 1526.

It is to be appreciated that FIG. 15 describes software that acts as an intermediary between users and the basic computer resources described in suitable operating environment 1510. Such software includes an operating system 1528. Operating system 1528, which can be stored on disk storage 1524, acts to control and allocate resources of the computer system 1512. System applications 1530 take advantage of the management of resources by operating system 1528 through program modules 1532 and program data 1534 stored either in system memory 1516 or on disk storage 1524. It is to be appreciated that one or more embodiments of the subject disclosure can be implemented with various operating systems or combinations of operating systems.

A user enters commands or information into the computer 1512 through input device(s) 1536. Input devices 1536 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1514 through the system bus 1518 *via* interface port(s) 1538. Interface port(s) 1538 include, for example, a serial port, a parallel port, a game port, and a universal serial bus (USB). Output device(s) 1540 use some of the same type of ports as input device(s) 1536. Thus, for example, a USB port may be used to provide input to computer 1512, and to output information from computer 1512 to an output device 1540. Output adapter 1542 is provided to illustrate that there are some output devices 1540 like monitors, speakers, and printers, among other output devices 1540, which require special adapters. The output adapters 1542 include, by way of illustration and not limitation, video and sound cards that provide a means of connection between the output device 1540 and the system bus 1518. It should be noted that other devices and/or systems of devices provide both input and output capabilities such as remote computer(s) 1544.

Computer 1512 can operate in a networked environment using logical connections to one or more remote computers, such as remote computer(s) 1544. The remote computer(s) 1544 can be a personal computer, a server, a router, a network PC, a workstation, a microprocessor based appliance, a peer device or other common network node and the like, and typically includes many or all of the elements described relative to computer 1512. For purposes of brevity, only a memory storage device 1546 is illustrated with remote computer(s) 1544. Remote computer(s) 1544 is logically connected to computer 1512 through a network interface 1548 and then physically connected *via* communication connection 1550. Network interface 1548 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL). Computer 1510 can also operate in a wireless network (e.g., WIFI).

Communication connection(s) 1550 refers to the hardware/software employed to connect the network interface 1548 to the bus 1518. While communication connection 1550 is shown for illustrative clarity inside computer 1512, it can also be external to computer 1512. The hardware/software necessary for connection to the network interface 1548 includes, for exemplary purposes only, internal and external technologies such as, modems including regular telephone grade modems, cable modems and DSL modems, ISDN adapters, Ethernet cards and wireless modems and other wireless technologies.

FIG. 16 is a schematic block diagram of a sample-computing environment 1600 with which the disclosed subject matter can interact. The system 1600 includes one or more client(s) 1610. The client(s) 1610 can be hardware and/or software (*e.g*., threads, processes, computing devices). The system 1600 also includes one or more server(s) 1630. The server(s) 1630 can also be hardware and/or software (*e.g.*, threads, processes, computing devices). The servers 1630 can house threads to perform transformations by employing one or more embodiments as described herein, for example. One possible communication between a client 1610 and a server 1630 can be in the form of a data packet adapted to be transmitted between two or more computer processes. The system 1600 includes a communication framework 1650 that can be employed to facilitate communications between the client(s) 1610 and the server(s) 1630. The client(s) 1610 are operably connected to one or more client data store(s) 1660 that can be employed to store information local to the client(s) 1610. Similarly, the server(s) 1630 are operably connected to one or more server data store(s) 1640 that can be employed to store information local to the servers 1630.

The above description of illustrated embodiments, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

As used herein, the word "example" is used herein to mean serving as an example, instance, or illustration. For the avoidance of doubt, the subject matter described herein is not limited by such examples. In addition, any aspect or design described herein as an "example" is not necessarily to be construed as preferred or advantageous over other aspects or designs, nor is it meant to preclude equivalent structures and techniques known to those of ordinary skill in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

In this regard, while the described subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims.

## Claims

1. An industrial controller, comprising:
a memory that stores computer-executable instructions; and
a processor that facilitates execution of the computer-executable instructions to at least:
provide a first configurable event object comprising a first timing or sequence context and a second configurable event object comprising a second timing or sequence context in parallel to a queue; and
facilitate consumption of the first configurable event object by a first code element when the first code element is available and a consumption of the second configurable event object by a second code element when the second code element is available.

2. The industrial controller of claim 1, wherein the first configurable event object comprises a first user-configured attribute and the second configurable event object comprises a second user-configured attribute.

3. The industrial controller of claim 1, wherein the processor facilitates the execution of the computer-executable instructions to provide a dialogue to facilitate configuration of the first code element to activate upon arrival of the first configurable event object or the second code element to activate upon arrival of the second event object.

4. The industrial controller of claim 1, wherein the processor facilitates the execution of the computer-executable instructions to facilitate production of a third configurable event object with a third timing or sequence context by the first code element.

5. The industrial controller of claim 4, wherein the processor facilitates the execution of the computer-executable instructions to facilitate production of a fourth configurable event object with a fourth timing or sequence context by the second code element.

6. A method, comprising:
queuing, by an industrial controller including a processor, a first event object on a queue according to a first timing or sequence context;
queuing, by the industrial controller, a second event object on the queue according to a second timing or sequence context in parallel to the queuing of the first event object;
facilitating, by the industrial controller, consumption of the first event object from the queue by a first code element; and
facilitating, by the industrial controller, consumption of the second event object from the queue by a second code element.

7. The method of claim 6, further comprising providing, by the industrial controller, a dialogue to facilitate configuration of the first code element to activate upon arrival of the first event object or the second code element to activate upon arrival of the second event object.

8. The method of claim 6, further comprising facilitating, by the industrial controller, generation of a chart illustrating a relationship between a first event associated with the first event object and a second event associated with the second event object according to an attribute.

9. The method of claim 8, further comprising facilitating, by the industrial controller, repetition of the generation of the chart over a plurality of cycles of the first event and the second event.

10. The method of claim 6, further comprising facilitating, by the industrial controller, configuration of a first attribute of the first event object or configuration of a second attribute of the second event object.

11. A computer readable storage medium having computer-executable instructions stored thereon that, in response to execution by a computing device including a processor, cause a computing device to perform operations, the operations comprising:
providing a first event object comprising a first attribute to a queue;
providing a second event object comprising a second attribute to the queue in parallel with the first event;
activating a first code element through consumption of the first event object from the queue; and
activating a second code element through consumption of the second event object from the queue.

12. The computer readable storage medium of claim 11, wherein the operations further comprise facilitating configuration of the first attribute or the second attribute.

13. The computer readable storage medium of claim 11, wherein the first event object comprises a first timing or sequence context and the second event object comprises a second timing or sequence context.

14. The computer readable storage medium of claim 11, wherein the operations further comprise providing a dialogue to facilitate configuration of the first code element to activate by arrival of the first event object or the second code element to activate by arrival of the second event object.

15. The computer readable storage medium of claim t), wherein the operations further comprise producing a third event object comprising a third attribute by the first code element upon consumption of the first event object and a fourth event object comprising a fourth attribute by the second code element upon consumption of the second event object.
